# EUROPEAN PATENT APPLICATION

(11) **EP 4 521 401 A1**
(43) Date of publication of application: **12.03.2025**
(21) Application number: 24711959.7
(22) Date of filing: 22.03.2024
(51) Int. Cl.: G10L 21/10, G06T 13/20, G06T 7/269, G06T 5/00, G10L 15/04, G10L 21/055, G06N 20/00

(54) **BATTERY MODULE**

(30) Priority: 20.07.2023 KR 20230009225
(71) Applicant: Yeonho Trading Co., Ltd., Seoul 06040 (KR)
(72) Inventor: CHUN, Jong Sic, Seoul 06040 (KR); KIM, Tae Hun, Seoul 05854 (KR)
(74) Representative: Nederlandsch Octrooibureau
(86) International application number: PCT/KR2024/003607
(87) International publication number: WO 2025/018495

(57) **Abstract**

A battery module according to the present disclosure includes a lower case in which a plurality of battery cells are accommodated, an upper case covering the lower case and including openings formed to discharge gas occurring when an internal pressure of the battery cells is above a certain level, and an insulating portion coupled to one inner surface of the upper case to cover the openings, wherein the insulating portion includes an insulating paper formed to include 55 to 70 parts by weight of kaolin, 13 to 22 parts by weight of 1,4-benzenedicarbonyl dichloride (C₈H₄Cl₂O₂). and 6 to 11 parts by weight of aluminum hydroxide (Al(OH)₃).

## Description

### [Technical Field]

The embodiments of the present disclosure relate to a battery module used to charge or supply electricity in electric vehicles, power storage devices, or portable electronic products.

### [Background Art]

Recently, as technology development and demand for electric vehicles, hybrid vehicles, power storage devices, and uninterruptible power supply systems have increased, demand for secondary batteries as an energy source has rapidly increased. In particular, battery packs used in electric and hybrid vehicles are made up of high-power, large-capacity secondary batteries, and a lot of research therefor has been conducted.

In particular, lithium secondary batteries have a higher energy density per unit weight and may be charged quickly compared to other secondary batteries, such as existing lead storage batteries, nickel-cadmium batteries, nickel-hydrogen batteries, and nickel-zinc batteries, and thus, the use of lithium secondary batteries has been actively increased.

Lithium secondary batteries have an operating voltage of 3.6V or higher and are used as a power source for portable electronic devices, or multiple batteries may be connected in series or parallel to be used in high-power electric vehicles, hybrid vehicles, power tools, electric bicycles, power storage devices, and uninterruptible power supply systems, etc.

Meanwhile, when a battery pack generates power, heat is generated due to an electrochemical reaction, and if this heat remains as it is in cells inside the battery pack, a temperature of the cells may increase to worsen operating conditions of the cells to deteriorate power generating efficiency, and in addition, pressure inside the sealed battery pack may increase due to the generated heat, leading to a risk of explosion, and therefore, ensuring safety is an important task.

In the related art, a method of preventing an explosion by forcibly turning off power has been used to prevent an explosion due to an increase in temperature according to the use of a battery pack.

This method immediately turns off power to prevent the temperature of the battery pack from rising any further, but there is a problem in that the temperature remaining inside the battery pack has the potential to cause the battery pack to explode.

### [Disclosure]

### [Technical Problem]

An object of the present disclosure is to provide a battery module that may be prevented from exploding due to high temperatures by discharging internal gas to induce an immediate temperature drop when the temperature of the battery module rises above a set pressure.

### [Technical Solution]

A battery module according to an embodiment of the present disclosure for accomplishing the above objects includes: a lower case in which a plurality of battery cells are accommodated; an upper case covering the lower case and including openings formed to discharge gas occurring when an internal pressure of the battery cells is above a certain level; and an insulating portion coupled to one surface of the upper case to cover the openings, wherein the insulating portion includes an insulating paper formed to include 55 to 70 parts by weight of kaolin; 13 to 22 parts by weight of 1,4-benzenedicarbonyl dichloride (C8H4Cl2O2); and 6 to 11 parts by weight of aluminum hydroxide (Al(OH)3).

According to an embodiment of the present disclosure, a first region in which an adhesive layer may be formed to be attached to the upper case and a second region covering the openings are formed on one surface of the insulating paper, and an open pattern formed to rupture when the gas may be discharged is formed on the insulating paper corresponding to the second region.

According to an embodiment of the present disclosure, a thickness of the insulating paper may be 0.10 to 0.15 mm, the open pattern may include lines formed to have a notching depth of 50 to 90 µm, and the open pattern may include at least two intersections formed by the lines crossing each other per opening.

According to an embodiment of the present disclosure, the insulating paper may be formed to have a weight of 160 to 220 g/m2, a density of 1.3 to 1.6 g/cc, a tensile strength of 30 to 50 N/cm, and a bursting strength of 150 to 210 KPa.

### [Advantageous Effects]

The battery module configured as described above may be prevented from exploding due to high temperatures in advance by discharging internal gas to induce an immediate temperature drop when the temperature of the battery module rises above a set pressure. As a result, the stability of the battery module may ultimately be effectively increased, and internal gas occurring due to a rapid increase in pressure of a battery cell may be discharged in a preset direction, thereby maintaining the pressure inside the battery constant.

In addition, by maintaining a voltage drop time of the battery constant, sufficient evacuation time for passengers present in an electric vehicle may be secured in an emergency situation.

### [Description of Drawings]

FIG. 1 is an exploded perspective view of a battery module according to an embodiment of the present disclosure.
FIG. 2 is a conceptual diagram of an insulating sheet used in FIG. 1.
FIG. 3 is a view illustrating one surface of the insulating sheet shown in FIG. 1.

### [Best Mode for Invention]

Hereinafter, specific embodiments for carrying out the present disclosure will be described with reference to the drawings. The embodiments of the present disclosure are intended to describe one invention, and the scope of the present disclosure is not limited to the illustrated embodiments, and the illustrated drawings should not be interpreted as being limited to the drawings because only key contents are enlarged and minor details are omitted for clarity of the invention. In the following description, usage of suffixes, such as 'module', 'part' or 'unit' used for referring to elements is given merely to facilitate explanation of the present disclosure, without having any significant meaning by itself. In the present disclosure, the same reference numerals are given to the same or similar components in the different embodiments, and a redundant description thereof will be omitted. As used herein, the singular forms "a", "an" and "the" are intended to include the plural forms as well, unless the context clearly indicates otherwise.

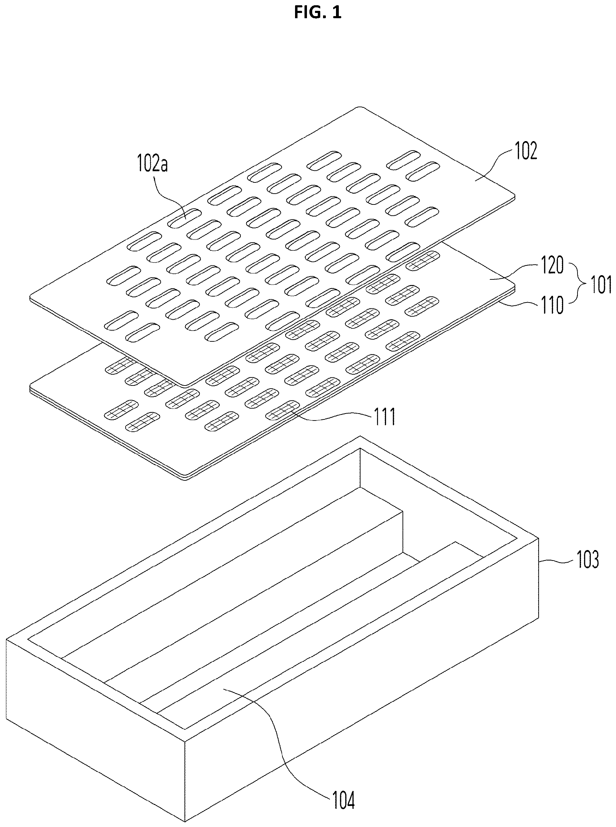

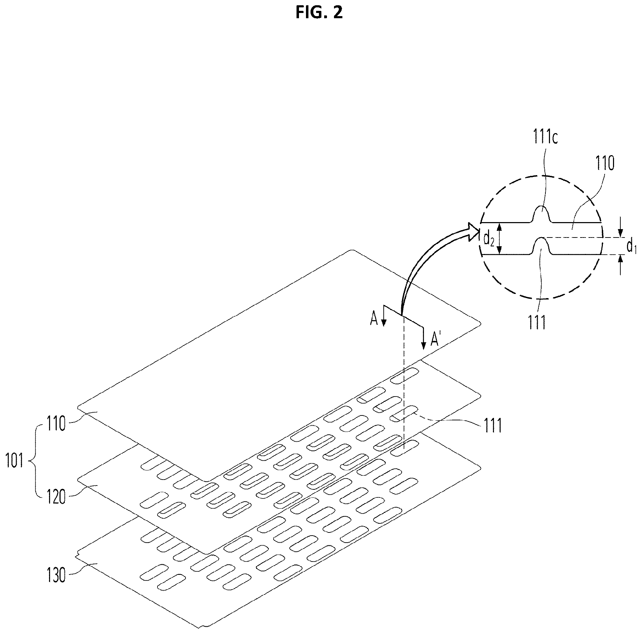

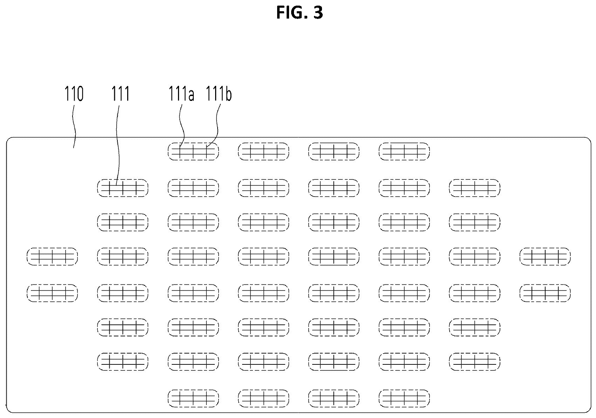

FIG. 1 is an exploded perspective view of a battery module according to an embodiment of the present disclosure, FIG. 2 is a conceptual diagram of an insulating sheet used in FIG. 1, and FIG. 3 is a view illustrating one surface of the insulating sheet shown in FIG. 1.

Referring to FIGS. 1 to 3, a battery module according to an embodiment of the present disclosure includes a lower case 103, an upper case 102, and an insulating sheet 101.

The lower case 103 is formed to accommodate battery cells 104. The lower case 103 may be formed of a metal or synthetic resin, or at least a portion may be formed of a different material. For example, the lower case 103 may be entirely formed of a metal material, and at least a portion of the lower case 103 may be formed of a synthetic resin material. Battery cells may each include an electrode assembly and a cover. The electrode assembly may be formed such that a separator is interposed between a positive electrode plate and a negative electrode plate. The cover is configured to receive the electrode assembly. Electrode terminals may be formed on one side and the other side of the battery cells, and the battery cells may be electrically connected by a bus bar formed of metal. When an internal pressure of the battery cells exceeds a certain level, part of the cover may be damaged to discharge gas to the outside. At this time, the internal pressure may be 150 to 210 KPa.

The upper case 102 is coupled to the lower case 103 to cover the lower case 103. The upper case 102 includes openings 102a formed to discharge gas occurring when an internal pressure of the battery cell is above a certain level. The upper case 102 may be formed of a metal or synthetic resin, or at least a portion thereof may be formed of a different material.

An insulating sheet 101 is formed on one surface of the upper case 102 to cover the openings 102a formed in the upper case 102.

Referring to FIGS. 2 and 3, two regions are formed on one surface of the insulating sheet 101. A rear surface of an insulating paper is shown in FIG. 2, and a front surface of the insulating paper is shown in FIG. 3. An adhesive layer 120 is formed in a first region of the insulating paper. The first region includes most of the regions in the insulating paper that do not cover the openings. The adhesive layer 120 may be formed by coupling a double-sided tape to the insulating paper 110. A second region covers the openings formed in the upper case 102, and an open pattern 111 is formed in the insulating paper 110 corresponding to the second region. A portion in which the open pattern 111 is not formed is the first region, and the insulating sheet 101 is provided to an assembler in a state in which a release paper and the insulating paper 110 are initially coupled by the adhesive layer 120, and an operator may separate the release paper from the insulating sheet 101 and couples the insulating sheet 101 to the upper case 102. The insulating sheet 101 may be coupled to one inner surface or one outer surface of the upper case 102.

A thickness d2 of the insulating paper 110 is preferably 0.10 to 0.15 mm, and the open pattern 111 formed in the insulating paper 110 includes lines having a notching depth of 50 to 90 µm. The notching depth may be changed depending on a set internal pressure. When the internal pressure is 150 to 210 KPa, a notching depth d1 of the open pattern 111 may be 50 to 90 µm. If the thickness of the insulating paper 110 is less than 0.1 mm, the insulating paper 110 may rupture at a lower pressure or rupture in the open pattern 111 may not be induced. On the other hand, if the thickness of the insulating paper 110 exceeds 0.15 mm, the insulating paper 110 may not easily rupture and thermal deformation may occur in the insulating paper 110.

Here, notching refers to forming a recess 111 having a certain shape in the insulating paper 110. The recess 111 may be formed in the insulating paper 110 using laser notching equipment or press notching equipment (for example, punching equipment) . The recess may have a "U" shape, a "V" shape, etc. The open pattern may be manufactured to have various shapes depending on a designer's intention. For example, an open pattern may include "--" or "Y" as part of the pattern.

According to an embodiment, the open pattern 111 is formed to include at least two intersection points 111a and 111b formed by lines per opening crossing each other. As a result, the open pattern 111 may rupture at an internal pressure exceeding a certain level to form and a plurality of open holes, thereby allowing gas to be discharged more smoothly and quickly.

The insulating paper 110 according to an embodiment of the present disclosure has a weight of 160 to 220 g/m2, a density of 1.3 to 1.6 g/cc, a tensile strength of 30 to 50 N/cm, and a bursting strength of 150 to 210 KPa. In addition, the insulating paper 110 according to an embodiment of the present disclosure preferably has a dielectric breakdown voltage of 1.4 KV/mm or more.

For the physical properties of the insulating paper described above, the insulating paper 110 includes 55 to 70 parts by weight of kaolin, 13 to 22 parts by weight of 1,4-benzenedicarbonyl dichloride (C8H4Cl2O2), and 6 to 11 parts by weight of aluminum hydroxide (Al(OH))3 and is formed by a process of forming fibers into sheets. That is, the insulating paper 110 according to an embodiment of the present disclosure may be manufactured by a method of forming aramid fibers into sheets.

Specifically, a wet papermaking method in which aramid fibers are dry mixed and then an insulating paper may be formed using air currents or aramid fibers are dispersed and mixed in a liquid medium and then discharged onto a support, such as a liquid-permeable net, to form a sheet, and then dried after removing the liquid, etc. may be used. In the wet papermaking method, an aqueous slurry containing aramid fibers is supplied to a papermaking machine, dispersed, followed by dewatering, squeezing, and drying, so as to be wound as a sheet. As a papermaking machine, a Fourdrinier papermaking machine, a cylinder papermaking machine, an inclined type papermaking machine, etc. may be used. A method of manufacturing insulating paper 110 using aramid fibers is generally known, and is known, for example, in Korean Patent Laid-open Publication No. 10-2017-0099968.

The insulating paper 110 obtained in this manner is thermally pressed at high temperatures and high pressure between a pair of rollers to improve density, heat resistance, mechanical strength, etc. When using a metal roller, it is preferable to work at a temperature of 220 to 260 °C and a nip pressure of 280 to 320 kg/cm.

Here, aramid is classified into para-aramid, meta-aramid, and copolymers thereof, depending on a position of substitution of an amide group on a benzene ring. Examples of para-aramids include polyparaphenylene terephthalamide and copolymers thereof, poly(paraphenylene)-copoly(3,4'-diphenyl ether) terephthalamide (poly(paraphenylene)-copoly(3, 4'-diphenyl ether)terephthalamide), etc. Examples of meta-aramid include polymetaphenyleneisophthalamide and copolymers thereof. These aramids are industrially manufactured by, for example, conventionally known interfacial polymerization methods, solution polymerization methods, etc., and may be obtained as commercial products, but are not limited thereto. However, in the present disclosure, 1,4-benzenedicarbonyl dichloride (C8H4Cl2O2) was used as an aramid fiber.

The insulating paper 110 may additionally include at least one type of binder. Resins may be used as binders, which may be in the form of water-soluble or dispersible polymers that are added directly to a papermaking dispersion, or may be in the form of thermoplastic binder fibers of a resin material mixed with aramid fibers to be activated as a binder by heat applied to drying or between subsequent additional compression and/or heat treatment. Water-soluble or dispersible polymers include, for example, water-soluble or water-dispersible thermosetting resins, such as polyamide resin, epoxy resin, phenol resin, urea resin, urethane resin, melamine formaldehyde resin, thermosetting polyester resin, and alkyd resin. In particular, water-soluble polyamide resins are useful. Aqueous solutions or dispersions of thermoplastic resins, such as poly(vinyl alcohol), polypropylene, polyester, and poly(vinyl acetate) may also be used. However, in the present disclosure, aluminum hydroxide (Al(OH)3) was used as a binder.

In addition, the insulating paper 110 may additionally include at least one type of filler. The type of filler is not particularly limited, but inorganic fillers are preferable, and, for example, clays, such as mica, graphite, kaolin, and bentonite, thermally conductive fillers, such as carbon nanotubes, aluminum nitride, aluminum oxide, boron nitride, magnesium oxide, zinc oxide, etc. may be included. Kaolin was used in the present disclosure.

The battery module described above is not limited to the configuration and method of the embodiments described above, and the embodiments may be configured by selectively combining all or part of each embodiment so that various modifications may be made.

### Industrial Applicability

The battery module according to the embodiments of this invention can be used in various applications, including vehicles, electronic products, and other products that require secondary batteries.

## Claims

1. A battery module comprising:
a lower case in which a plurality of battery cells are accommodated;
an upper case covering the lower case and including openings formed to discharge gas occurring when an internal pressure of the battery cells is above a certain level; and
an insulating portion coupled to one surface of the upper case to cover the openings,
wherein the insulating portion includes an insulating paper formed to include:
55 to 70 parts by weight of kaolin;
13 to 22 parts by weight of 1,4-benzenedicarbonyl dichloride (C₈H₄Cl₂O₂); and
6 to 11 parts by weight of aluminum hydroxide (Al(OH)₃).

2. The battery module of claim 1, wherein
a first region in which an adhesive layer is formed to be attached to the upper case and a second region covering the openings are formed on one surface of the insulating paper, and
an open pattern formed to rupture when the gas is discharged is formed on the insulating paper corresponding to the second region.

3. The battery module of claim 2, wherein
a thickness of the insulating paper is 0.10 to 0.15 mm,
the open pattern includes lines formed to have a notching depth of 50 to 90 µm, and
the open pattern includes at least two intersections formed by the lines crossing each other per opening.

4. The battery module of claim 3, wherein the insulating paper is formed to have a weight of 160 to 220 g/m², a density of 1.3 to 1.6 g/cc, a tensile strength of 30 to 50 N/cm, and a bursting strength of 150 to 210 KPa.
